# EUROPEAN PATENT SPECIFICATION

(11) **EP 0 340 684 B1**
(45) Date of publication and mention of the grant of the patent: **25.08.1993**
(21) Application number: 89107807.3
(22) Date of filing: 28.04.1989
(51) Int. Cl.: F16J 15/40, F16C 33/10

(54) **Bearing equipment for vacuum device**
Lagerausrüstung für Vakuumvorrichtung
Equipement de palier pour dispositif sous vide

(30) Priority: 30.04.1988 JP 108178/88
(43) Date of publication of application: 08.11.1989
(73) Proprietor: NIPPON FERROFLUIDICS CORPORATION, Tokyo 107 (JP)
(72) Inventor: Yamamura, Akira, Shibuya-ku Tokyo 150 (JP)
(74) Representative: Feldkamp, Rainer, Dipl.-Ing.

(56) References cited:
- EP-A- 0 249 319
- DE-U- 8 705 884
- FR-A- 2 313 592
- US-A- 4 526 397

## Description

The present application relates to a bearing device for use with vacuum devices, especially vacuum pumps. JP-A1 119813/1986 describes a bearing device in which the bearing shaft has a spherical head to mate with a concave bearing surface in which a magnetic fluid (ferrofluid) is interposed between the spherical head and the bearing surface and held in place by a permanent magnet.

Attemps have been made to utilize this type of bearing device in various fields by virtue of its simple structure and a minimized number of parts.

In an attempt to apply the above bearing device to a vacuum device which is rotationally driven at high speed, it was found that the following inconvenience occurs. That is, when the bearing device is used for a vacuum device in a low-pressure atmosphere, sufficient cooling effect may not be obtained against the heated magnetic fluid, so that the speed of consuming the magnetic fluid is accelerated, whereby the bearing device may not show a sufficient duration of life.

The problem to be solved by the invention is to provide a bearing for a vacum device as set out above which is of simple and economic design and has a long bearing life.

This problem is solved by a bearing device for a vacuum device comprising:
a magnetic piece having a portion thereof formed into a concave spherical shape;
a rotatable shaft member having first and second portions;
said second portion having an end part formed into a partially spherical shape to mate with the concave spherical shape formed in said magnetic piece;
magnetic fluid means disposed intermediate the said mated spherical shapes;
and characterized by:
first and second generally annular pole pieces;
a permanent magnet member having an annular shape fitted between first and second annular pole pieces, said
second annular pole piece forming part of said magnetic piece;
said first annular pole piece having a plurality of ring members formed on an inner surface thereof and an aperture formed centrally therein;
said first portion of said rotatable shaft member having a larger diameter for fitting through the aperture formed in the first annular pole piece;
further magnetic fluid means disposed intermediate the said ring portions of said first annular pole piece and said first portion of said rotatable shaft member for providing a high pressure seal;
said second portion of said rotatable shaft member being exposed to atmospheric pressure.

Advantageous developements are set out in claims 2 and 3.

The bearing device for vacuum devices mentioned above provides the following advantages:
First, sufficient cooling of the magnetic fluid of the bearing section can be obtained, since the bearing section is open to the atmosphere, whereby the life of the bearing can be extended.
Secondly, the orientation of the bearing device is not limited and it can be installed in any arbitrary position since both magnetic fluids are magnetically retained in position.
Thirdly, the bearing device has a simple structure, since the magnetic fluids at the bearing and sealing section are designed to be retained in position by use of a single annular permanent magnet.

### Brief Description of the Drawings

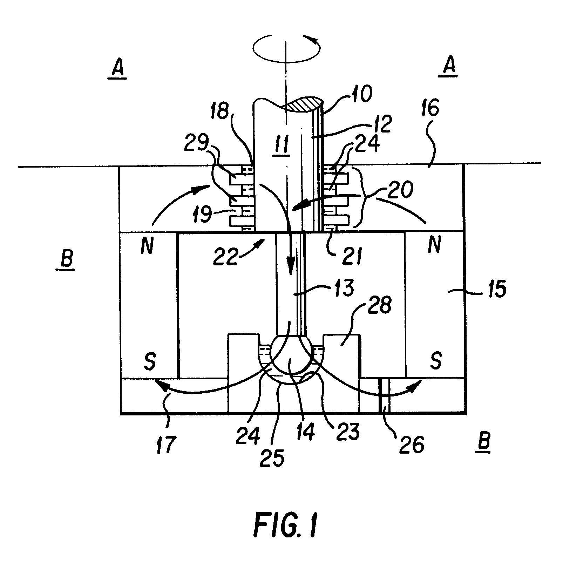

Figure 1 shows one embodiment of the present invention in vertical sectional view taken along its center line.

### Description

In Figure 1, number 10 shows generally a bearing device for use with vacuum devices which is exposed on one end, shown by the letter 'A', to the low pressure, and which is exposed on the other end, shown by letter 'B', to atmospheric pressure or other relatively high pressure.

A rotatable shaft 11 has a first portion 12 with a large diameter and a second portion 13 with a small diameter. The second portion of the shaft 11 has a partially spherically shaped head 14 formed on the end of the shaft. Head 14 mates with a spherically shaped concave surface 23 formed in an axially extending central section 28 of a pole piece 17. Magnetic fluid 24 is interposed between members 14 and 23. An annular permanent magnet 15 is held in place by annular pole pieces 16 and 17 placed on either axial end of the annular permanent magnet 15. An orifice 18 is formed in the pole piece 16 for permitting the insertion of portion 12 of shaft 11. The pole piece 16 also has formed thereon outwardly extending annular rings 29 which form grooves 19. Together rings 29 form a set of grooves 20 of the sealing section. A magnetic fluid is placed between the rings 29 and held in place by the magnetic flux from the permanent magnet 15.

An aperture 26 is formed in pole piece 17 open to atmospheric or other relatively high pressure which permits the bearing section 25 to be opened to greater density air for more efficient cooling and longer bearing life.

The magnetic fluids 21 and 24 are magnetically retained in position by means of the annular magnet 15, wherein the upper end and the lower end thereof have different polarity.
A radially polarized magnetic circuit is formed to have a magnetic flux flowing from the upper end of the annular magnet 15 through the annular pole piece 16, the large-diameter portion 12 and the small-diameter portion 13 of the shaft 11, the spherical head 14 and the pole piece 17 to the lower end surface of the annular magnet 15. The magnetic fluids 21 and 24 are retained within this circuit. The annular pole piece 16, the shaft 11 and the pole piece 17 are of course made of a magnetically permeable material.

## Claims

1. A bearing device (10) for a vacuum device comprising:
a magnetic piece (17,28) having a portion thereof formed into a concave spherical shape (23);
a rotatable shaft member (11) having first and second portions (12,13);
said second portion (13) having an end part formed into a partially spherical shape (14) to mate with the concave spherical shape (23) formed in said magnetic piece (17,28);
magnetic fluid means disposed intermediate the said mated spherical shapes (23,14);
characterized by:
first and second generally annular pole pieces (16,17);
a permanent magnet member (15) having an annular shape fitted between first and second annular pole pieces (16,17), said second annular pole piece (17) forming part of said magnetic piece (17,28);
said first annular pole piece (16) having a plurality of ring members (29) formed on an inner surface thereof and an aperture (18) formed centrally therein;
said first portion (12) of said rotatable shaft member (11) having a larger diameter for fitting through the aperture (18) formed in the first annular pole piece (16);
further magnetic fluid means disposed intermediate the said ring portions (29) of said first annular pole piece (16) and said first portion (12) of said rotatable shaft member (11) for providing a high pressure seal;
said second portion (13) of said rotatable shaft member (11) being exposed to atmospheric pressure.

2. The device (10) as claimed in claim 1, characterized by an aperture (26) connecting the space inside said first and second pole pieces (16,17) and said annular permanent magnet member (15) to the high pressure side of said bearing (10).

3. The device (10) as claimed in claim 1 or 2, characterized by including further a plurality of groove members formed in said first portion (12) of said rotatable shaft member (11) and being aligned with said ring members (29) of said first annular pole piece (16).

## Patentansprüche

1. Lagerbaugruppe (10) für ein Vakuumgerät mit:
einem Magnetpolstück (17, 28) von dem ein Abschnitt zu einer konkaven kugelförmigen Form (23) geformt ist,
ein drehbares Wellenbauteil (11) mit ersten und zweiten Abschnitten (12,13),
wobei der zweite Abschnitt (13) einen Endteil aufweist, der mit einer teilweise kugelförmigen Form (14) derart versehen ist, daß er an die konkave kugelförmige Form (23) angepaßt ist, die in dem Magnetpolstück (17,28) ausgebildet ist,
einem magnetischen Strömungsmedium, das zwischen den aneinander angepaßten kugelförmigen Formen (23,14) eingefügt ist,
gekennzeichnet durch:
erste und zweite allgemein ringförmige Polstücke (16,17), ein Permanentmagnetbauteil (15) mit einer Ringform, das zwischen den ersten und zweiten ringförmigen Polstücken (16,17) eingesetzt ist, wobei das zweite ringförmige Polstück (17) einen Teil des Magnetpolstückes (17,28) bildet,
wobei das erste ringförmige Polstück (16) eine Vielzahl von Ringelementen (29), die an einer Innenoberfläche des ersten ringförmigen Polstückes ausgebildet sind, und eine in seiner Mitte ausgebildete Öffnung (18) aufweist,
wobei der erste Abschnitt (12) des drehbaren Wellenbauteils (11) einen größeren Durchmesser aufweist, so daß er durch die Öffnung (18) paßt, die in dem ersten ringförmigen Polstück (16) ausgebildet ist,
ein weiteres magnetisches Strömungsmedium, das zwischen den Ringelementen (29) des ersten ringförmigen Polstückes (16) und dem ersten Abschnitt (12) des drehbaren Wellenbauteils (11) angeordnet ist, um eine Hochdruckdichtung zu schaffen,
wobei der zweite Abschnitt (13) des drehbaren Wellenbauteils (11) einem atmosphärischem Druck ausgesetzt ist.

2. Baugruppe (10) nach Anspruch 1, gekennzeichnet durch eine Öffnung (26), die den Raum in Inneren der ersten und zweiten Polstücke (16,17) und des ringförmigen Permanentmagnetbauteils (15) mit der Hochdruckseite des Lagers (10) verbindet.

3. Baugruppe (10) nach Anspruch 1 oder 2, gekennzeichnet durch den Einschluß einer Vielzahl von Nutenelementen, die in dem ersten Abschnitt (12) des drehbaren Wellenbauteils (11) ausgebildet sind und mit den Ringelementen (29) des ersten ringförmigen Polstückes (16) ausgerichtet sind.

## Revendications

1. Dispositif de palier (10) destiné à un appareil de vide comprenant :
un élément magnétique (17,28) présentant une portion formée en une configuration sphérique concave (23) ;
un élément d'arbre rotatif (11) présentant des première et seconde portions (12,13) ;
la seconde portion 13 présentant une partie d'extrémité formée en une configuration partiellement sphérique (14) pour épouser la configuration sphérique concave (23) formée dans l'élément magnétique (17,28) ;
des moyens de fluide magnétique disposés entre les configurations sphériques appariées (23,14) ;
caractérisé par :
des premier et second éléments polaires de façon générale annulaires (16,17) ;
un élément d'aimant permanent (15) de configuration annulaire encastré entre des premier et second éléments polaires annulaires (16,17), le second élément polaire annulaire (17) constituant une partie de l'élément magnétique (17,28) ;
le premier élément polaire annulaire (16) présentant plusieurs éléments d'anneaux (29) constitués sur sa surface interne et une ouverture (18) ménagée centralement dans celui-ci ;
la première portion (12) de l'élément d'arbre rotatif (11) présentant un plus grand diamètre pour s'emboîter dans l'ouverture (18) ménagée dans le premier élément polaire annulaire (16) ;
des moyens de fluide magnétique supplémentaires disposés entre les portions d'anneaux (29) du premier élément polaire annulaire (16) et la première portion (12) de l'élément d'arbre rotatif (11) destinée à assurer une étanchéité haute pression ;
la seconde portion (13) de l'élément d'arbre rotatif (11) étant exposée à la pression atmosphérique.

2. Dispositif (10) selon la revendication 1, caractérisé par une ouverture (26) reliant l'espace à l'intérieur des premier et second éléments polaires (16,17) et l'élément d'aimant permanent annulaire (15) au côté haute pression du palier (10).

3. Dispositif (10) selon la revendication 1 ou 2, caractérisé par le fait d'ajouter plusieurs éléments de gorge ménagés dans la première portion (12) de l'élément d'arbre rotatif (11) et d'effectuer l'alignement sur les éléments d'anneaux (29) du premier élément polaire annulaire (16).
